# EUROPÄISCHE PATENTSCHRIFT

(11) **EP 3 582 876 B1**
(45) Veröffentlichungstag und Bekanntmachung des Hinweises auf die Patenterteilung: **10.03.2021**
(21) Anmeldenummer: 18705837.5
(22) Anmeldetag: 29.01.2018
(51) Int. Cl.: B01D 46/24, F01N 3/022, F01N 3/28, F01N 3/021, F01N 3/00

(54) **RUSSPARTIKELFILTER MIT SPEICHERZELLEN FÜR KATALYSATOR**
SOOT PARTICLE FILTER WITH STORAGE CELLS FOR A CATALYST
FILTRES À PARTICULES COMPRENANT DES ALVÉOLES D'ACCUMULATION DE CATALYSEUR

(30) Priorität: 17.02.2017 DE 102017103341
(43) Veröffentlichungstag der Anmeldung: 25.12.2019
(73) Patentinhaber: Umicore AG & Co. KG, 63457 Hanau-Wolfgang (DE)
(72) Erfinder: FRANOSCHEK, Stefan, 41334 Nettetal (DE)
(86) Internationale Anmeldenummer: PCT/EP2018/052167
(87) Internationale Veröffentlichungsnummer: WO 2018/149627

(56) Entgegenhaltungen:
- EP-B1- 1 642 012
- WO-A1-2005/016497

## Beschreibung

Die Erfindung betrifft Wandstromfilter zur Reinigung von Abgasen aus Motoren mit wechselseitig geschlossenen parallelen Abgaseinlasskanälen und Abgasauslasskanälen, wobei der Filter zusätzlich Katalysatorkanäle aufweist, die beidseitig verschlossen sind und Katalysator in fester Form enthalten. Gegenstand der Erfindung sind auch Herstellungsverfahren und Verwendungen der Filter zur Reinigung von Abgasen.

### Stand der Technik

Partikelfilter dienen zur Reduzierung der im Abgas von Motoren vorhandenen Partikel. Partikelfilter werden insbesondere zur Filterung der Abgase von Dieselmotoren eingesetzt und als Dieselpartikelfilter (DPF) oder Rußpartikelfilter (RPF) bezeichnet. Rußpartikelfilter können nach zwei verschiedenen Funktionsweisen konstruiert sein, die sich grundsätzlich unterscheiden. Während die Abgase bei Wandstromfiltern im Filter eine poröse Wand durchdringen, durchfließen die Abgase bei Durchflussfiltern den Filter und werden an seiner inneren Oberfläche gereinigt.

Ein Partikelfilter zur Reduzierung der im Abgas von Motoren vorhandenen Partikel ist in EP1642012 offenbart.

Wandstromfilter weisen eine Struktur aus parallelen Kanälen mit porösen Wänden auf, die wechselseitig verschlossen sind. Die porösen Filterwände bestehen im Allgemeinen aus Keramiken oder aus Metallen. Die Abgase treten in endseitig verschlossene Einlasskanäle ein und durchströmen die porösen Wände, wodurch sie in stirnseitig verschlossene Auslasskanäle gelangen und von dort in die Umgebung freigesetzt werden. Die festen Komponenten, insbesondere die Rußpartikel, werden durch die porösen Wände gefiltert. Die Partikel sammeln sich bei Oberflächenfiltern hauptsächlich an der Oberfläche der Filterwand an oder akkumulieren bei der Tiefenfiltration im Inneren der Filterwand.

Bei im Stand der Technik üblichen Wandstromfiltern sind die porösen Wände mit katalytischen Beschichtungen ausgestattet. Diese unterstützen die Abreicherung von unerwünschten Abgaskomponenten durch chemische Reaktionen. Die Katalysatoren dienen insbesondere zur Abreicherung von unerwünschten gasförmigen Abgaskomponenten, wie Stickoxiden (NOx), CO, Kohlenwasserstoffen oder H₂S. Dabei werden vergleichsweise unschädliche Produkte erhalten, wie H₂O, CO₂ oder N₂. Die Katalysatoren können auch feste Komponenten entfernen oder deren Abbau unterstützen, beispielsweise durch Reaktion von Ruß zu CO₂. Die katalytischen Beschichtungen enthalten üblicherweise Metalle und Metalloxide, insbesondere Edelmetalle oder Nebengruppenmetalle, wie Platin, Palladium, Rhodium, Nickel, Kobalt, Molybdän, Wolfram, Cer, Kupfer, Vanadium, Eisen, Gold oder Silber. Im Stand der Technik sind auch Beschichtungen mit Speichermaterialien bekannt, die unerwünschte gasförmige Komponenten einlagern können. Die allgemeine Funktion solcher Filter und die zugrunde liegenden chemischen und physikalischen Prozesse werden beispielsweise in van Setten et al., "Science and Technology of Catalytic Diesel Particulate Filters", 2001, Catalysis Reviews 43(4), 489-564, beschrieben. Mit Katalysator beschichtete Wandstromfilter und Verfahren zu ihrer Herstellung werden beispielsweise in der WO2005/016497A1 beschrieben.

Solche beschichteten Rußpartikelfilter sind jedoch noch verbesserungsbedürftig. So besteht ein kontinuierlicher Bedarf nach effizienten Wandstromfiltern, die einen hohen Gasfluss ermöglichen, einen guten Filtereffekt erreichen, dabei durch katalytische Reaktion weitere unerwünschte Komponenten effizient entfernen, und dabei eine kompakte und stabile Struktur aufweisen.

Um einen ausreichenden Abgasfluss aufrecht zu erhalten und dabei einen ausreichenden Filtereffekt zu erreichen, müssen die Beschichtungen eine definierte Porosität aufweisen, die genau auf die der porösen Wände abgestimmt ist. Daher dürfen die katalytischen Beschichtungen üblicher Wandstromfilter regelmäßig nur eine begrenzte Dicke aufweisen. Anderenfalls würde beim bestimmungsgemäßen Betrieb ein zu hoher Gegendruck entstehen. Wegen der geringen Dicke der Beschichtung, die zudem noch porös ist, kann der Filter nur mit einer begrenzten Menge katalytisch aktiven Materials ausgestattet werden. Da solche Standardbauteile, insbesondere für Kraftfahrzeuge, kompakt sein müssen, um einen platzsparenden Einbau zu ermöglichen und das Gewicht so wenig wie möglich zu erhöhen, lässt sich dies nicht ohne weiteres durch ein Vergrößerung des Filters kompensieren,

Im Stand der Technik werden daher Wandstromfilter verwendet, deren Kanalwände eine hohe Porosität aufweisen. So schlägt die EP 1 776 994 A1 Verfahren vor, um katalytische Beschichtungen mit einer definierten Porosität auszustatten. Dabei ist jedoch nachteilig, dass mit der Porosität sowohl die Rußfiltrationseffizienz als auch die mechanische Stabilität abnehmen.

Daher besteht nach wie vor ein kontinuierlicher Bedarf nach kompakten Filtern, die hohe Mengen katalytisch aktiven Materials enthalten, aber ungeachtet dessen gute Filtrationseigenschaften aufweisen und kompakt und mechanisch stabil sind.

Ein weiterer Nachteil üblicher Wandstromfilter ist, dass die Verfahren zu ihrer Herstellung relativ aufwändig sind. Solche Filter werden üblicherweise hergestellt, indem bei Unterdruck flüssige Lösungen und Suspensionen der Katalysatorkomponenten (Wash Coat) in die Filter hineingesaugt werden. Dabei ist es aufwändig, im Filterinneren für verschiedene katalytische Materialien eine gleichmäßige Beschichtung zu erreichen und dabei auch die erforderliche Porosität der Beschichtung genau einzustellen. Daher sind solche Katalysatorbeschichtungen nur in aufwändigen Verfahren herstellbar, wobei die einzelnen Arbeitsschritte, wie Wash-Coat-Vorbereitung, Beschichtung bei Unterdruck, Trocknen und Calzinieren genau kontrolliert werden müssen und relativ störanfällig sind. Es wäre daher wünschenswert, vereinfachte Verfahren zur Herstellung von Wandstromfiltern bereitzustellen.

### Aufgabe der Erfindung

Der Erfindung liegt die Aufgabe zugrunde, Wandstromfilter mit Katalysatoren bereitzustellen, welche die oben beschriebenen Nachteile des Standes der Technik überwinden. Erfindungsgemäß sollen verbesserte Wandstromfilter bereitgestellt werden, die eine hohe katalytische Aktivität aufweisen. Dabei sollen die Katalysatoren gute Filtereigenschaften und eine hohe mechanische Stabilität aufweisen und einen hohen Gasfluss bei kompakter Bauweise ermöglichen.

Der Erfindung liegt außerdem die Aufgabe zugrunde, vereinfachte Verfahren zur Herstellung von Wandstromfiltern bereitzustellen. Die Verfahren sollen die Nachteile bekannter Beschichtungsverfahren vermeiden, die unter anderem durch die erforderliche präzise Kontrolle der Porosität und der begrenzten Dicke der Beschichtungen bedingt sind. Erfindungsgemäß soll es ermöglicht werden, ohne besonderen Aufwand im Hinblick auf die Anforderungen verschiedene Katalysatormaterialien in gewünschten Mengen einzusetzen, zu variieren oder zu kombinieren.

### Offenbarung der Erfindung

Überraschenderweise wird die der Erfindung zugrunde liegende Aufgabe gelöst durch Wandstromfilter und Verfahren gemäß den Patentansprüchen. Weitere vorteilhafte Ausgestaltungen werden in der Beschreibung erläutert.

Gegenstand der Erfindung ist ein Wandstromfilter zur Reinigung von Abgasen aus Motoren, umfassend wechselseitig geschlossene parallele Abgaseinlasskanäle und Abgasauslasskanäle, wobei der Filter zusätzlich Katalysatorkanäle aufweist, die beidseitig verschlossen sind, und die den Katalysator in fester Form enthalten und die Einlasskanäle und die Katalysatorkanäle gemeinsame Wände aufweisen und die Auslasskanäle und die Katalysatorkanäle ebenfalls gemeinsame Wände aufweisen. Letztere sind beidseitig verschlossen, also an der Stirnseite (Abgasaseinlassseite) und an der Endseite (Abgasauslassseite). Dadurch ist der Katalysator in den Katalysatorkanälen eingeschlossen.

Die Grundstruktur des erfindungsgemäßen Wandstromfilter aus parallelen wechselseitig geschlossenen Abgaseinlasskanälen und Abgasauslasskanälen wird im Stand der Technik auch als "Honeycomb"-Struktur oder "Monolith" bezeichnet. Der Filter besteht im Wesentlichen aus parallelen Kanälen, welche die Einlassseite mit der Auslassseite verbinden. Die Kanäle weisen im Allgemeinen einen homogenen Querschnitt und poröse Wände auf. Die Abgase strömen vom Motor in die stirnseitig geöffneten Einlasskanäle, die endseitig verschlossen sind. Die Abgase strömen dann durch die porösen Wände der Einlasskanäle in die stirnseitig geschlossenen Auslasskanäle und entweichen schließlich durch die endseitigen Auslassöffnungen. Die Filtration der festen Partikel, insbesondere der Rußpartikel, erfolgt an oder in den porösen Wänden, wobei sich die Partikel auch in dem Bereich des endständigen Verschlusses ansammeln können.

Der erfindungsgemäße Wandstromfilter unterscheidet sich von bekannten Wandstromfiltern demnach dadurch, dass er zusätzlich Katalysatorkanäle aufweist und die Einlasskanäle und die Katalysatorkanäle gemeinsame Wände aufweisen und die Auslasskanäle und die Katalysatorkanäle ebenfalls gemeinsame Wände aufweisen. Dabei ist von Vorteil, dass ein hoher Gasfluss erreicht wird, so dass große Mengen Abgase aus den Einlasskanälen in die Katalysatorkanäle und in die Auslasskanäle gelangen können. Dadurch wird die Effizienz des Filters erhöht.

In einer bevorzugten Ausführungsform sind die Katalysatorkanäle zwischen den Einlasskanälen und den Auslasskanälen angeordnet, so dass die Abgase aus den Einlasskanälen durch die Katalysatorkanäle in die Auslasskanäle strömen. Bei dieser Ausführungsform ist vorteilhaft, dass sämtliche Abgase durch die Katalysatorkanäle gelangen. Dadurch wird eine hohe katalytische Effizienz erreicht.

In einer bevorzugten Ausführungsform weisen die Einlasskanäle und die Auslasskanäle keine gemeinsamen Wände auf. Dadurch wird gewährleistet, dass sämtliche Abgase durch die Katalysatorkanäle gelangen.

In einer bevorzugten Ausführungsform ist die Querschnittsfläche der Einlasskanäle und/oder der Auslasskanäle größer als die Querschnittsfläche der Katalysatorkanäle. Im Rahmen dieser Anmeldung werden mit den Begriffen "Querschnitt" und "Querschnittsfläche" Schnitte quer zur axialen Richtung bezeichnet. Mit einer solchen Ausgestaltung wird ein besonders effizienter Filter erhalten, weil das Volumen der Strömungskanäle maximiert und das Volumen der Katalysatorkanäle minimiert wird. Dieses Verhältnis kann vom Fachmann anhand der für die Katalyse und die Strömungsbedingungen vorteilhaftesten Ausgestaltung des Filters hin optimiert werden. Diese Ausgestaltung ermöglicht es, Katalysator einzusparen und insgesamt das Volumen und Gewicht des Filters zu minimieren.

In einer bevorzugten Ausführungsform weisen die porösen Wände der Kanäle mittlere Porendurchmesser von <20 µm, bevorzugt <10 µm oder <5 µm auf. Bevorzugt weisen die porösen Wände der Kanäle mittlere Porendurchmesser von 0,1 bis 20 µm, insbesondere zwischen 0,5 und 10 µm oder zwischen 1 und 5 µm auf. Die Porosität wird bevorzugt gemessen gemäß ASTM D6761-07(2012). Filter mit solchen relativ kleinen Porendurchmessern sind vorteilhaft, weil sie einen relativ hohen Filtrationswirkungsgrad und mechanische Stabilität aufweisen. Die Einstellung solcher kleiner Porendurchmesser ist erfindungsgemäß ohne weiteres über das Filtermaterial, insbesondere die Keramik, möglich, weil die Wände nicht beschichtet werden müssen und somit der Gasfluss nicht durch die Beschichtung verringert wird.

Der Katalysator ist in fester Form in den Katalysatorkanälen enthalten. Bevorzugt sind die Katalysatorkanäle mit dem Katalysator in fester Form befüllt. Bevorzugt liegt der Katalysator in fester Form in den Katalysatorkanälen nicht, oder nicht nur, als Beschichtung vor. Es ist vielmehr bevorzugt, dass der Katalysator im Inneren der Kanäle verteilt vorliegt. In einer bevorzugten Ausführungsform ist der Katalysator in Partikelform in den Katalysatorkanälen enthalten. Dabei können die Katalysatorkanäle mit dem Katalysator befüllt und anschließend verschlossen werden. Dies hat den Vorteil, dass die Kanäle auf relativ einfache Weise und relativ gleichmäßig mit dem Katalysator befüllt werden können. Neben der Katalysatorart und Menge kann die katalytische Aktivität ergänzend über die Partikelgröße, Partikelform und Partikelpackung eingestellt werden.

Besonders bevorzugt ist der Katalysator als Pulver enthalten. Das Pulver ist bevorzugt rieselfähig und daher als Schüttgut verwendbar. Dabei ist von Vorteil, dass die Kanäle auf einfache Weise mit dem Katalysator in fester Form befüllt werden können. Wenn ein pulverförmiger Katalysator eingesetzt wird, weist dieser bevorzugt eine mittlere Partikelgröße von >0,5 µm, bevorzug >10 µm oder >50 µm, jedoch weniger als 100 µm auf.

Der Katalysator in Partikelform kann, beispielsweise durch Einsaugen mittels Unterdruck und/oder als Bestandteil einer Suspension oder Lösung in die Kanäle eingebracht werden.

Es können auch mehrere Katalysatoren gleichzeitig in die entsprechenden Kanäle eingefüllt werden. So kann ggf. ein geschichtetes Arrangement von Katalysatoren erreicht werden (layered format) oder es kann eine zonierte Anordnung der Katalysatoren (zoned format) in den Kanälen bereitgestellt werden. Ebenso möglich ist die physikalische Vermischung von verschiedenen Katalysatoren, z.B. solchen zur NOx-Reduktion und solchen zur NH₃-Oxidation.

In einer weiteren Ausführungsform kann der Katalysator auch als Block oder Granulat enthalten sein, beispielsweise in Form eines porösen Blocks oder eines Verbundmaterials mit Katalysatorpartikeln in einer festen Matrix.

Erfindungsgemäß ist es nicht erforderlich, dass der Filter mit Katalysator beschichtete Wände aufweist. Eine effiziente Katalyse kann erreicht werden, wenn die Katalysatorkanäle auf einfache Weise mit dem Katalysator in fester Form befüllt werden. Daher weist der Filter in einer Ausführungsform nicht mit Katalysator beschichtete Wände auf.

Ungeachtet dessen ist es bevorzugt, dass der Filter zusätzlich zu dem festen Katalysator in den Kanälen mit Katalysator beschichtete Wände aufweist. Dabei können die Wände der Einlasskanäle, Auslasskanäle und Katalysatorkanäle beschichtet sein (layered oder zoned format), wobei im Inneren der Katalysatorkanäle zusätzlich Katalysator in fester Form enthalten ist. Bei dieser Ausführungsform ist vorteilhaft, dass zum einen die Katalysatorwirkung noch erhöht werden kann, und dass zum anderen verschiedene Katalysatoren miteinander kombiniert werden können. Dabei können auch Katalysatoren kombiniert werden, die in einer Beschichtung nicht kompatibel wären. So ist es denkbar, dass in den Katalysatorkanälen ein erster Katalysator in fester Form mit einer ersten Selektivität vorliegt, während die porösen Wände des Filters zusätzlich mit einem zweiten Katalysator mit einer zweiten, unterschiedlichen Spezifität beschichtet sind. Auf diese Weise kann insgesamt ein besonders effizienter Filter erhalten werden, der besonders gut an spezielle Anforderungen angepasst werden kann.

Die Kanäle können grundsätzlich beliebige Querschnittsflächen aufweisen, die beispielsweise rund, rechteckig, hexagonal, dreieckig oder ellipsoid sein können. Es ist dabei bevorzugt, dass die Kanäle eine Struktur aufweisen, die einen effizienten und vollständigen Gasfluss von den Einlasskanälen durch die Katalysatorkanäle in die Auslasskanäle unterstützt. Bevorzugt weisen die Kanäle insgesamt eine asymmetrische Struktur auf. Dies bedeutet, dass nicht alle Kanäle gleich ausgestaltet sind.

In einer bevorzugten Ausführungsform weisen die Katalysatorkanäle eine dreieckige oder rechteckige Querschnittsfläche auf. Bevorzugt sind dabei die Querschnittsflächen der Katalysatorkanäle kleiner als die Querschnittsflächen der Einlasskanäle und/oder der Auslasskanäle. Bei solchen Ausgestaltungen können die Raumverhältnisse im Filter auf optimale Weise eingestellt werden, so dass insgesamt ein besonders kompakter Filter erhalten wird, der auch auf relativ einfache Weise herstellbar ist, vor allem als Keramik.

In einer bevorzugten Ausführungsform weisen die Einlasskanäle und Auslasskanäle jeweils einen hexagonalen Querschnitt und die Katalysatorkanäle einen dreieckigen Querschnitt auf. Dabei ist vorteilhaft, dass die Kanäle besonders platzsparend angeordnet werden können, und dass die Herstellung relativ einfach erfolgen kann.

In einer bevorzugten Ausführungsform weisen die Einlasskanäle, Auslasskanäle und Katalysatorkanäle jeweils einen rechteckigen Querschnitt auf, wobei die Querschnitte der Kanäle unterschiedlich sein können und aufeinander abgestimmt werden können. Auch bei dieser Ausführungsform lassen sich kompakte Filter mit optimal eingestellten Katalysatormengen auf einfache Weise bereitstellen.

Die erfindungsgemäßen Wandstromfilter sind zur Reinigung von Abgasen aus Motoren, insbesondere aus Dieselmotoren, geeignet. Über die porösen Wände werden feste Partikel aus den Abgasen gefiltert. Die festen Partikel sind insbesondere Rußpartikel, aber auch sonstige Partikel, wie Salze, insbesondere Sulfate, oder Metallaschen. Mit dem Katalysator können durch chemische Reaktion gasförmige Abgaskomponenten, wie Stickoxide (NOx), CO, Kohlenwasserstoffe oder H₂S, beseitigt werden. Dabei werden vergleichsweise unschädliche Produkte erhalten, wie H₂O, CO₂ oder N₂. Der Katalysator kann dabei auch so ausgestaltet sein, dass er gefilterte Partikel, insbesondere Rußpartikel, mittels chemischer Reaktion abbaut. Der Katalysator kann auch so ausgewählt sein, dass er unerwünschte Substanzen speichert. Die allgemeine Funktion solcher Filter und die zugrunde liegenden chemischen und physikalischen Prozesse sind dem Fachmann bekannt und werden beispielsweise in van Setten et al., "Science and Technology of Catalytic Diesel Particulate Filters", 2001, Catalysis Reviews 43(4), 489-564, beschrieben.

Erfindungsgemäß können im Stand der Technik übliche Filtermaterialien und Katalysatoren eingesetzt werden. So können die erfindungsgemäßen Wandstromfilter Katalysatoren enthalten, die im Stand der Technik in Beschichtungen von Partikelfiltern mit Oxidationskatalysator (CDPF), Partikelfilter mit SCR-Beschichtung (SDPF; SCR = Selektive Katalytische Reduktion), Partikelfiltern mit NOx-Speicher-Reduktionskatalysatoren (NDPF) oder Partikelfiltern mit Dreiwegkatalystoren (OPF) enthalten sind.

Der Filter selbst kann aus für Wandstromfilter üblichen Materialien bestehen und nach üblichen Verfahren hergestellt sein. Im Stand der Technik werden insbesondere Filter aus Keramik oder Metall eingesetzt, wobei Keramikfilter für Automobilanwendungen am meisten verbreitet sind. Bevorzugte keramische Materialien sind Kordierit, Siliciumcarbid, Siliciumnitrid, α-Aluminiumoxid, Zirconium, Zirconiumphosphat, Aluminiumtitanat, Mullit, Spodumen, Aluminiumoxid-Siliciumoxid-Magnesiumoxid oder Zirconiumsilicat. Solche Filter werden bevorzugt als Monolith, also als einstückige Keramik, eingesetzt. Alternativ sind auch Ausgestaltungen mit Wänden aus Fasermaterialien möglich. Besonders bevorzugt werden Monolithen aus Kordierit, Aluminiumtitanat oder Siliciumcarbid eingesetzt. Wandstromfilter basierend auf Keramiken und anderen Materialien und Verfahren zu ihrer Herstellung sind im Stand der Technik bekannt. Beispielhaft wird auf die WO2005/016497A1, die EP 1 776 994 A1 oder auf Majewski, "Wall-Flow Monoliths", 2005, www.DieselNet.com, Ecopoint Inc. Revision 2005.09b, verwiesen.

Die Herstellung der Filter und die Einstellung der Porosität können nach bekannten Verfahren erfolgen. Erfindungsgemäß ist es von Vorteil, dass die Porosität nicht aufwändig mit der Menge der Beschichtung abgestimmt werden muss. Erfindungsgemäß muss im Wesentlichen die Porosität der Filterwände eingestellt werden, was das Herstellungsverfahren erheblich vereinfacht. Besonders vorteilhaft ist, dass eine konkrete Keramik mit einer definierten Porosität - mit oder ohne Katalysatorbeschichtung - ohne weiteres mit verschiedenen festen Katalysatoren befüllt werden kann, ohne die Porosität wesentlich zu verändern. Insbesondere wenn der Gasfluss nicht durch eine Beschichtung verringert wird, können Filter mit sehr feinen Poren im Bereich von <10 µm eingesetzt werden.

Als Katalysatoren werden bevorzugt solche mit Speicherfunktion für NOx, NH₃, O₂, Kohlenwasserstoffe, H₂S oder SOx eingesetzt.

Der Wandstromfilter weist bevorzugt ein Gehäuse auf, in dem die Filterkomponente mit dem Katalysator eingesetzt ist. Solche Gehäuse bestehen üblicherweise aus Stahl. Der Filter kann dabei übliche Verbindungsmittel oder sonstige Einreichungen, wie Mittel zur Verringerung von Vibrationen oder zur Zuführung von Reagenzien, enthalten.

Gegenstand der Erfindung ist auch ein Verfahren zur Herstellung des erfindungsgemäßen Wandstromfilters, umfassend die Schritte:
(a) Bereitstellen eines Wandstromfilters, der wechselseitig geschlossene parallele Abgaseinlasskanäle und Abgasauslasskanäle aufweist, und der zusätzliche Katalysatorkanäle aufweist, die einseitig verschlossen sind,
(b) Bereitstellen des Katalysators,
(c) Einbringen des Katalysators in die Katalysatorkanäle, und
(d) Endseitiges Verschließen der Katalysatorkanäle.

In Schritt (a) wird ein Wandstromfilter bereitgestellt, bei dem die Katalysatorkanäle noch nicht mit dem Katalysator in fester Form befüllt sind. Der Wandstromfilter kann beschichtet sein, wobei auch die Katalysatorkanäle beschichtet sein können. In Schritt (b) wird der Katalysator zur Befüllung der Katalysatorkanäle bereitgestellt. Dabei ist es bevorzugt, dass der Katalysator in fester Form bereitgestellt wird und in die Katalysatorkanäle eingebracht wird. Der Katalysator wird in einer geeigneten Konsistenz bereitgestellt, um das gleichmäßige und vollständige Befüllen der Katalysatorkanäle zu ermöglichen. Dies kann beispielsweise mit einem rieselfähigen pulverförmigen Katalysator erfolgen, der durch Unterdruck eingesaugt werden kann. Der Katalysator kann auch in Form einer Suspension oder Lösung bereitgestellt werden, wobei die flüssige Komponente nach dem Befüllen der Kanäle entfernt wird. Nachdem eine gewünschte Menge des Katalysators in die Katalysatorkanäle eingebracht wurde, werden diese auch an der Gegenseite verschlossen. Die Katalysatorkanäle sind dann beidseitig verschlossen und der Katalysator kann nicht mehr aus dem Filter hinausgelangen. Gegebenenfalls folgt ein Reinigungsschritt (e), bei dem der Filter gereinigt wird, wobei insbesondere unerwünschte Katalysatorreste aus den Abgaseinlasskanälen und Abgasauslasskanälen entfernt werden. Gegebenenfalls erfolgt ein Nachbehandlungsschritt (f), bei dem der Katalysator nachbehandelt wird, beispielsweise gesintert oder getrocknet wird.

Gegenstand der Erfindung ist auch die Verwendung des erfindungsgemäßen Wandstromfilters zur Reinigung von Abgasen aus Verbrennungsprozessen, insbesondere Motoren, wie aus Dieselmotoren oder Ottomotoren. Die Verwendung erfolgt insbesondere als Rußpartikelfilter, wobei bevorzugt mindestens eine gasförmige Komponenten aus den Abgasen abgereichert wird. Die Verwendung erfolgt insbesondere für Kraftfahrzeuge.

Der erfindungsgemäße Wandstromfilter kann mit weiteren im Stand der Technik üblichen Einrichtungen kombiniert werden, um die Abgasreinigung zu gewährleisten oder zu verbessern. So kann eine Kombination mit weiteren Filter- oder Katalysatoreinrichtungen erfolgen oder es können Vorrichtungen zur Beimischung von Reagenzien, wie HC, NH₃ oder Harnstofflösung, angeschlossen werden.

Die Ausgestaltung der erfindungsgemäßen Wandstromfilter wird nachfolgend beispielhaft und schematisch anhand der Figuren 1 bis 3 erläutert.
Fig. 1 zeigt beispielhaft und schematisch einen erfindungsgemäßen Wandstromfilter im Querschnitt mit Katalysatorkanälen (dunkel), Abgaseinlasskanälen (schraffiert) und Abgasauslasskanälen (hell).
Fig. 2 zeigt beispielhaft und schematisch einen erfindungsgemäßen Wandstromfilter mit hexagonalen Einlasskanälen (schraffiert) und Auslasskanälen (hell) und dreieckigen Katalysatorkanälen (dunkel).
Fig. 3 zeigt beispielhaft und schematisch einen erfindungsgemäßen Wandstromfilter mit rechteckigen Katalysatorkanälen (dunkel), Abgaseinlasskanälen (schraffiert) und Abgasauslasskanälen (hell).

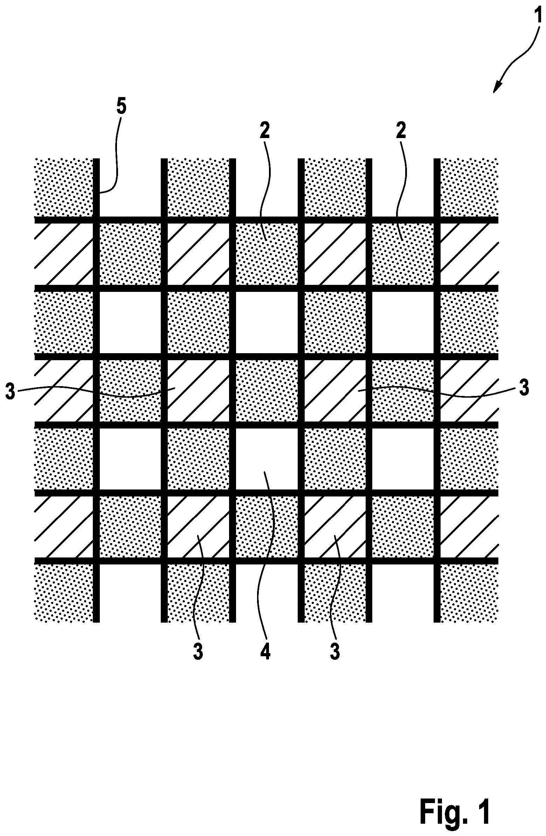

Fig. 1 zeigt einen erfindungsgemäßen Wandstromfilter 1 im Querschnitt. Die Katalysatorkanäle 2, Abgaseinlasskanäle 3 und Abgasauslasskanäle 4 weisen quadratischen Querschnitte gleicher Größe auf. Die Kanäle sind durch gemeinsame poröse Wände 5 voneinander getrennt. Jeder Einlasskanal 3 und Auslasskanal 4 ist über gemeinsame Wände mit vier Katalysatorkanälen 2 verbunden. Dadurch können nahezu sämtliche Abgase nur in einen Auslasskanal gelangen, wenn sie vorher einen Katalysatorkanal durchströmen. Lediglich an den Ecken der Quadrate besteht ein kleiner unmittelbarer Kontakt zwischen einem Einlasskanal und einem Auslasskanal. Wenn der Wandstromfilter ausreichend dünne Wände aufweist, ist jedoch die Gasmenge, die über die Ecken von einem Abgaseinlasskanal in einen Abgasauslasskanal gelangt, vernachlässigbar. Außerdem kann eine zusätzliche katalytische Wirkung mit einer katalytischen Beschichtung erreicht werden. Die Ausgestaltung gemäß Fig. 1 mit quadratischen Kanälen identischer Größe ist vorteilhaft, da die Herstellung der Filter relativ einfach ist und da die mechanische Stabilität wegen der gleichmäßigen Verteilung der Strukturelemente relativ hoch ist. Da die Katalysatorkanäle relativ groß sind, kann es bei dieser Ausführungsform bevorzugt sein, die katalytische Aktivität durch Beimischung eines inerten Trägermaterials einzustellen.

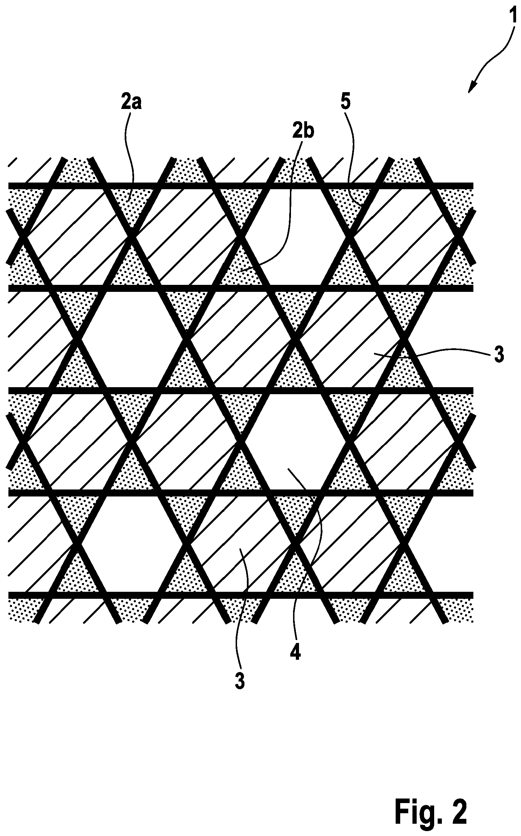

In Fig. 2 ist ein Wandstromfilter 1 mit hexagonalen Einlasskanälen 3 und hexagonalen Auslasskanälen 4 dargestellt. Die Katalysatorkanäle 2a und 2b sind dreieckig und können unterschiedliche Größen aufweisen. Jeder hexagonale Einlasskanal und jeder hexagonale Auslasskanal ist über die sechs Seitenwände ausschließlich mit Katalysatorkanälen verbunden. Dadurch wird gewährleistet, dass die Abgase von den Einlasskanälen durch die Katalysatorkanäle in die Auslasskanäle strömen.

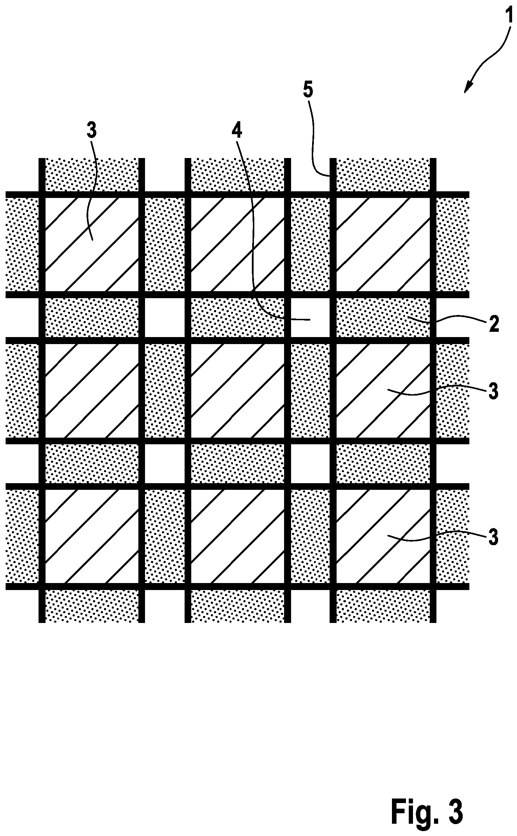

In Fig. 3 ist ein erfindungsgemäßer Wandstromfilter 1 mit rechteckigen Kanälen gezeigt. Lediglich beispielhaft sind quadratische Einlasskanälen 3 und größere quadratischen Auslasskanälen 4 gezeigt. Die Einlasskanäle 3 und Auslasskanäle 4 sind über die gemeinsamen Wände 5 nur mit den rechteckigen, länglichen Katalysatorkanälen 2 verbunden. Solche Ausgestaltungen haben den Vorteil, dass die Katalysatorkanäle kleiner sind und Katalysatormaterial eingespart oder platz- und volumensparend eingesetzt werden kann. Alternativ sind alternative Ausführungsformen möglich, beispielsweise mit größeren quadratischen Einlasskanälen und kleineren quadratischen Auslasskanälen.

Die erfindungsgemäßen Wandstromfilter, Verfahren und Verwendungen lösen die oben beschriebene Aufgabe. Erfindungsgemäß werden einfache, verbesserte Wandstromfilter bereitgestellt, die eine hohe katalytische Aktivität aufweisen. Die Filter weisen gute Filtereigenschaften und eine hohe mechanische Stabilität auf, wobei sie einen hohen Gasfluss bei kompakter Bauweise ermöglichen. Erfindungsgemäß werden auch vereinfachte Verfahren zur Herstellung von Wandstromfiltern bereitgestellt, wobei der Einsatz verschiedener Katalysatoren in relativ großen Mengen ermöglich wird. Verschiedene Katalysatormaterialien können im Hinblick auf die Anforderungen mit geringem Aufwand eingesetzt, variiert oder kombiniert werden, ohne dass die Porosität beeinträchtigt wird.

## Patentansprüche

1. Wandstromfilter (1) zur Reinigung von Abgasen aus Motoren, umfassend wechselseitig geschlossene parallele Abgaseinlasskanäle (3) und Abgasauslasskanäle (4), wobei der Filter zusätzlich Katalysatorkanäle (2) aufweist, die beidseitig verschlossen sind und Katalysator in fester Form enthalten, **dadurch gekennzeichnet, dass** die Einlasskanäle (3) und die Katalysatorkanäle (2) gemeinsame Wände aufweisen und wobei die Auslasskanäle (4) und die Katalysatorkanäle (2) gemeinsame Wände (5) aufweisen.

2. Filter gemäß Anspruch 1, wobei die Katalysatorkanäle (2) zwischen den Einlasskanälen (3) und den Auslasskanälen (4) angeordnet sind, so dass die Abgase aus den Einlasskanälen (3) durch die Katalysatorkanäle (2) in die Auslasskanäle (4) strömen.

3. Filter gemäß mindestens einem der vorhergehenden Ansprüche, wobei die Einlasskanäle (3) und die Auslasskanäle (4) keine gemeinsamen Wände (5) aufweisen.

4. Filter gemäß mindestens einem der vorhergehenden Ansprüche, wobei die Querschnittsfläche der Einlasskanäle (3) und/oder der Auslasskanäle (4) größer ist als die Querschnittsfläche der Katalysatorkanäle (2).

5. Filter gemäß mindestens einem der vorhergehenden Ansprüche, wobei die porösen Wände der Kanäle mittlere Porendurchmesser von <20 µm aufweisen.

6. Filter gemäß mindestens einem der vorhergehenden Ansprüche, wobei der Katalysator in den Katalysatorkanälen (2) in Partikelform enthalten ist.

7. Filter gemäß mindestens einem der vorhergehenden Ansprüche, wobei die Wände (5) zusätzlich mit Katalysator beschichtet sind.

8. Filter gemäß mindestens einem der vorhergehenden Ansprüche, wobei die Katalysatorkanäle (2) einen dreieckigen oder rechteckigen Querschnitt aufweisen.

9. Filter gemäß mindestens einem der Ansprüche 1 bis 8, wobei die Einlasskanäle (3) und Auslasskanäle (4) jeweils einen hexagonalen Querschnitt aufweisen und die Katalysatorkanäle (2) einen dreieckigen Querschnitt aufweisen.

10. Filter gemäß mindestens einem der Ansprüche 1 bis 8, wobei die Einlasskanäle (3), Auslasskanäle (4) und Katalysatorkanäle (2) jeweils einen rechteckigen Querschnitt aufweisen.

11. Verfahren zur Herstellung eines Wandstromfilters gemäß mindestens einem der vorhergehenden Ansprüche, umfassend die Schritte:
(a) Bereitstellen eines Wandstromfilters, der wechselseitig geschlossene parallele Abgaseinlasskanäle (3) und Abgasauslasskanäle (4) aufweist, und der zusätzliche Katalysatorkanäle (2) aufweist, die einseitig verschlossen sind,
(b) Bereitstellen des Katalysators,
(c) Einbringen des Katalysators in die Katalysatorkanäle (2), und
(d) Endseitiges Verschließen der Katalysatorkanäle (2).

12. Verwendung eines Wandstromfilters gemäß mindestens einem der Ansprüche 1 bis 10 zur Reinigung von Abgasen aus Motoren, insbesondere aus Dieselmotoren.

## Claims

1. Wall-flow filter (1) for cleaning exhaust gases from engines, comprising alternately closed, parallel exhaust gas inlet channels (3) and exhaust gas outlet channels (4), wherein the filter additionally has catalyst channels (2) which are closed at both ends and contain a catalyst in solid form, **characterized in that** the inlet channels (3) and the catalyst channels (2) have common walls and wherein the outlet channels (4) and the catalyst channels (2) have common walls (5).

2. Filter according to Claim 1, wherein the catalyst channels (2) are disposed between the inlet channels (3) and the outlet channels (4) so that the exhaust gases flow from the inlet channels (3) through the catalyst channels (2) into the outlet channels (4).

3. Filter according to at least one of the preceding claims, wherein the inlet channels (3) and the outlet channels (4) have no common walls (5).

4. Filter according to at least one of the preceding claims, wherein the cross-sectional area of the inlet channels (3) and/or of the outlet channels (4) is larger than the cross-sectional area of the catalyst channels (2).

5. Filter according to at least one of the preceding claims, wherein the porous walls of the channels have mean pore diameters < 20 µm.

6. Filter according to at least one of the preceding claims, wherein the catalyst is contained in the catalyst channels (2) in the form of particles.

7. Filter according to at least one of the preceding claims, wherein the walls (5) are additionally coated with catalyst.

8. Filter according to at least one of the preceding claims, wherein the catalyst channels (2) have a triangular or rectangular cross-section.

9. Filter according to at least one of Claims 1 to 8, wherein the inlet channels (3) and outlet channels (4) in each case have a hexagonal cross-section and the catalyst channels (2) have a triangular cross-section.

10. Filter according to at least one of Claims 1 to 8, wherein the inlet channels (3), outlet channels (4) and catalyst channels (2) in each case have a rectangular cross-section.

11. Method for producing a wall-flow filter according to at least one of the preceding claims, comprising the steps:
(a) Providing a wall-flow filter having parallel exhaust gas inlet channels (3) and exhaust gas outlet channels (4) which are closed at alternate ends, and having additional catalyst channels (2) closed at one end,
(b) Providing the catalyst,
(c) Introducing the catalyst into the catalyst channels (2), and
(d) Closing the catalyst channels (2) at the back end.

12. Use of a wall-flow filter according to at least one of Claims 1 through 10 for cleaning exhaust gases from engines, in particular, from diesel engines.

## Revendications

1. Filtre à écoulement de paroi (1) destiné à épurer des gaz d'échappement provenant de moteurs, comprenant des canaux d'entrée de gaz d'échappement (3) et des canaux de sortie de gaz d'échappement (4) parallèles fermés d'un côté en alternance, dans lequel le filtre présente également des canaux de catalyseur (2), qui sont fermés des deux côtés et contiennent un catalyseur sous forme solide, **caractérisé en ce que** les canaux d'entrée (3) et les canaux de catalyseur (2) présentent des parois communes et dans lequel les canaux de sortie (4) et les canaux de catalyseur (2) présentent des parois (5) communes.

2. Filtre selon la revendication 1, dans lequel les canaux de catalyseur (2) sont disposés entre les canaux d'entrée (3) et les canaux de sortie (4), de sorte que les gaz d'échappement circulent depuis les canaux d'entrée (3) à travers les canaux de catalyseur (2) dans les canaux de sortie (4).

3. Filtre selon au moins l'une des revendications précédentes, dans lequel les canaux d'entrée (3) et les canaux de sortie (4) ne présentent pas de parois communes (5).

4. Filtre selon au moins l'une des revendications précédentes, dans lequel la surface en section transversale des canaux d'entrée (3) et/ou des canaux de sortie (4) est plus grande que la surface en section transversale des canaux de catalyseur (2).

5. Filtre selon au moins l'une des revendications précédentes, dans lequel les parois poreuses des canaux présentent un diamètre de pore moyen de <20 µm.

6. Filtre selon au moins l'une des revendications précédentes, dans lequel le catalyseur est contenu dans les canaux de catalyseur (2) sous forme particulaire.

7. Filtre selon au moins l'une des revendications précédentes, dans lequel les parois (5) sont en outre revêtues avec un catalyseur.

8. Filtre selon au moins l'une des revendications précédentes, dans lequel les canaux de catalyseur (2) présentent une section transversale triangulaire ou rectangulaire.

9. Filtre selon au moins l'une des revendications 1 à 8, dans lequel les canaux d'entrée (3) et les canaux de sortie (4) présentent respectivement une section transversale hexagonale et les canaux de catalyseur (2) présentent une section transversale triangulaire.

10. Filtre selon au moins l'une des revendications 1 à 8, dans lequel les canaux d'entrée (3), les canaux de sortie (4) et les canaux de catalyseur (2) présentent respectivement une section transversale rectangulaire.

11. Procédé de fabrication d'un filtre à écoulement de paroi selon au moins l'une des revendications précédentes, comprenant les étapes de :
(a) fourniture d'un filtre à écoulement de paroi, qui présente des canaux d'entrée de gaz d'échappement (3) et des canaux de sortie de gaz d'échappement (4) parallèles fermés d'un côté en alternance et qui présente également des canaux de catalyseur (2), qui sont fermés d'un côté,
(b) fourniture du catalyseur,
(c) introduction du catalyseur dans les canaux de catalyseur (2) et
(d) fermeture côté extrémité des canaux de catalyseur (2).

12. Utilisation d'un filtre à écoulement de paroi selon au moins l'une des revendications 1 à 10 pour l'épuration de gaz d'échappement provenant de moteurs, en particulier de moteurs Diesel.
